# EUROPÄISCHE PATENTSCHRIFT

(11) **EP 0 927 574 B1**
(45) Veröffentlichungstag und Bekanntmachung des Hinweises auf die Patenterteilung: **27.08.2003**
(21) Anmeldenummer: 98890374.6
(22) Anmeldetag: 21.12.1998
(51) Int. Cl.: B01J 19/12, B01J 3/04

(54) **Verfahren und Vorrichtung zum Auslösen und/oder Durchführen chemischer Reaktionen**
Method and device for initiating and/or carrying out chemical reactions
Procédé et dispositif pour déclencher et/ou effectuer des réactions chimiques

(30) Priorität: 30.12.1997 AT 220397
(43) Veröffentlichungstag der Anmeldung: 07.07.1999
(73) Patentinhaber: Knapp, Günter, Dipl.-Ing.Dr., 8047 Graz (AT)
(72) Erfinder: Knapp, Günter, Dipl.Ing.Dr., 8047 Graz (AT); Platzer, Bernhard, Dipl.Ing.Dr., 8010 Graz (AT); Zischka, Michael, Dipl.Ing., 8046 Stattegg (AT)
(74) Vertreter: Cunow, Gerda

(56) Entgegenhaltungen:
- EP-A- 0 772 226
- DE-A- 3 913 519
- FR-A- 2 674 526
- US-A- 5 166 528
- PATENT ABSTRACTS OF JAPAN vol. 010, no. 203 (C-360), 16. Juli 1986 & JP 61 046290 A (TOSHIBA CORP), 6. März 1986

## Beschreibung

Die vorliegende Erfindung bezieht sich auf ein Verfahren zum Auslösen und/oder Durchführen chemischer Reaktionen durch Bestrahlung von insbesondere flüssigen oder Gemischen aus flüssigen und festen Ausgangsmaterialien mit einer kurzwelligen, elektromagnetischen Strahlung, welche von wenigstens einer Substanz emittiert wird, welche bei Bestrahlung und Anregung mit einer langwelligen, elektromagnetischen Strahlung bei Betriebsbedingungen kurzwellige, elektromagnetische Strahlung abgibt, und mit der langwelligen, elektromagnetischen Strahlung, wobei die kurzwellige, elektromagnetische Strahlung in einem in den Ausgangsmaterialien angeordneten, geschlossenen Behälter erzeugt wird, welcher die eine kurzwellige, elektromagnetische Strahlung emittierende Substanz enthält, sowie auf eine Vorrichtung zum Auslösen und/oder Durchführen chemischer Reaktionen durch Bestrahlung von insbesondere flüssigen oder flüssigen und festen, in einem Aufnahmebehälter aufgenommenen Ausgangsmaterialien mit einer kurzwelligen, elektromagnetischen Strahlung und mit einer langwelligen, elektromagnetischen Strahlung, mit einem Generator zur Erzeugung langwelliger, elektromagnetischer Strahlung sowie einem Behälter zur Aufnahme wenigstens einer Substanz, welche bei Bestrahlung und Anregung mit langwelliger, elektromagnetischer Strahlung bei Betriebsbedingungen kurzwellige, elektromagnetische Strahlung abgibt, wobei der Aufnahmebehälter für die Ausgangsmaterialien für die langwellige, elektromagnetische Strahlung durchlässig ausgebildet ist und der Behälter zur Aufnahme der kurzwellige, elektromagnetische Strahlung abgebenden Substanz im Aufnahmebehälter angeordnet ist und wenigstens teilweise von den Ausgangsmaterialien umschlossen ist.

Die Durchführung chemischer Reaktionen oder Verfahren durch Bestrahlung ist seit langer Zeit bekannt, wobei in Abhängigkeit von den eingesetzten Substanzen und den eingesetzten Strahlungen unterschiedlichste Effekte erzielt werden können. Es ist hiebei sowohl bekannt, chemische Verfahren durch Bestrahlung mit langwelligen, elektromagnetischen Wellen, wie beispielsweise Mikrowellen, oder auch mit kurzwelligen, elektromagnetischen Wellen, wie UV-Strahlen, zu starten oder zu fördern. So ist es bekannt, daß es mit UV-Strahlung möglich ist, Keime in Nahrungs- bzw. Genußmitteln oder in biologischem Material abzutöten und somit derartige Materialien zu sterilisieren, ohne daß dabei erhöhte Temperaturen angewandt werden müssen, wie dies beispielsweise aus der US-A 5 166 528 bekannt geworden ist. Darüber hinaus gelingt es, spezielle Reaktionen durch Anregung mit elektromagnetischen Wellen, welche sich im UV-Bereich befinden, zu starten bzw. in Gang zu halten, wohingegen die Verwendung von Mikrowellen in der Chemie insbesondere vorteilhaft ist, wenn Reaktionen bzw. Prozesse bei erhöhten Temperaturen ablaufen sollen.

Aus der EP-A 0 916 398, welche als Literaturstelle gemäß Art. 54(3) EPÜ zu berücksichtigen ist, ist eine Vorrichtung ähnlich der eingangs genannten Art bekannt geworden, wobei auf eine Verbesserung der Leistungsfähigkeit einer derartigen Vorrichtung zum Auslösen und/oder Fördern chemischer Prozesse durch Bestrahlung abgezielt wird.

In vielen Fällen führt jedoch insbesondere eine Kombination von sowohl langwelligen als auch kurzwelligen, elektromagnetischen Wellen zu besonders raschen und guten Ergebnissen, so daß bereits in der EP-A 0. 429 814 sowohl ein Verfahren als auch eine Vorrichtung zum Auslösen und/oder Fördern chemischer Prozesse vorgeschlagen wurde, in welcher sowohl langwellige, elektromagnetische Wellen, nämlich Mikrowellen, als auch kurzwellige, elektromagnetische Wellen, nämlich UV-Strahlen, eingesetzt wurden. Bei diesem Verfahren und der zugehörigen Vorrichtung wird hiebei so vorgegangen, daß ein Aufnahmebehälter für die zu behandelnden Ausgangsmaterialien und ein Gasreaktionsrohr in einem Mikrowellenofen angeordnet werden, wobei die vom Mikrowellenofen ausgesandten Wellen auf das Gasreaktionsrohr treffen, in welchem durch Mikrowellen anregbare Substanzen enthalten sind, welche nach der Anregung UV-Strahlen aussenden. Die von diesem Gasreaktionsrohr ausgesandten UV-Strahlen werden in der Folge auf den in dem Gasreaktionsrohr enthaltenen bzw. von diesem umgebenen Reaktionsbehälter gerichtet, in welchem sich die umzusetzenden Substanzen bzw. Ausgangsmaterialien befinden. Nachteilig bei dieser bekannten Ausführung ist insbesondere, daß ein großvolumiges und große Abmessungen aufweisendes Gasreaktionsrohr vorgesehen sein muß, welches geeignet ist, einen entsprechend großen Reaktionsbehälter zu umgeben, und daß insbesondere eine gleichmäßige Strahlendichte über das gesamte Volumen des Reaktionsbehälters, insbesondere in dessen Zentrum, bei entsprechender Größe des Reaktionsbehälters nicht ohne weiteres sichergestellt werden kann. Ein weiterer Nachteil eines den Reaktionsbehälter umschließenden Gasreaktionsrohres liegt darin, daß für den Reaktionsbehälter ausschließlich Materialien verwendet werden können, welche für kurzwellige, elektromagnetische Strahlung transparent sind. Das schränkt insbesondere den Einsatz von Druckreaktionsbehältern erheblich ein.

Die vorliegende Erfindung zielt nun darauf ab, ein Verfahren und eine Vorrichtung zur Verfügung zu stellen, mit welchen es gelingt, zur Auslösung und/oder Durchführung chemischer Reaktionen eine möglichst große Dichte an kurzwelliger UV-Strahlung direkt in dem umzusetzenden Reaktionsgemisch bzw. in den Ausgangsmaterialien zur Verfügung zu stellen, um somit sowohl eine spezifische Anregung als auch eine entsprechend vergrößerte Ausbeute an Reaktionsprodukten zur Verfügung stellen zu können.

Diese Aufgaben werden durch ein Verfahren gemäß dem Verfahrenshauptanspruch und eine Vorrichtung gemäß dem Vorrichtungshauptanspruch gelöst. Bevorzugte Ausführungsformen sind Gegenstand der abhängigen Unteransprüche.

Durch die erfindungsgemäße Verfahrensführung ist eine Reaktionsführung bei erhöhten Temperaturen möglich, wobei die erhöhten Temperaturen unmittelbar durch die langwellige, elektromagnetische Strahlung, insbesondere die Mikrowellen, erzeugt werden können und somit sowohl der Vorteil einer Beheizung des Reaktionsgemisches als auch eine Anregung der Gasentladung des UV-Strahlers in einem Arbeitsschritt gelingt. Durch die Verfahrensführung, daß der Behälter, welcher die kurzwellige, elektromagnetische Strahlung emittierende Substanz enthält, im Inneren der Ausgangsmaterialien angeordnet ist, kann das chemische Verfahren bzw. die chemischen Prozesse unter einem Druck von gegenüber Atmosphärendruck erhöhtem Druck bis etwa 200 bar durchgeführt werden. Insbesondere die Durchführung von Reaktionen unter erhöhtem Druck ist nur durch das Vorsehen des Behälters, welcher die kurzwellige, elektromagnetische Strahlung emittierenden Substanz enthält, im Inneren des Reaktionsgemisches möglich, da kurzwellige, elektromagnetische Strahlung oftmals nicht durch Hochdruckgefäße durchtreten kann, so daß Reaktionen unter Hochdruck bei den bis dato bekannten Verfahren nicht oder nur sehr schwer durchführbar waren. Indem weiters kurzwellige, elektromagnetische Wellen in einem in den Ausgangsmaterialien angeordneten, geschlossenen Behälter, welcher die UV-Strahlung emittierende Substanzen enthält, abgegeben werden, gelingt eine intensivere UV-Bestrahlung des Reaktionsgemisches bzw. der Ausgangsmaterialien, wodurch sowohl die Ausbeuten der Reaktionen der durch die elektromagnetische Strahlung angeregten Umsetzung verbessert und erhöht werden, als auch die Möglichkeit geschaffen wird, daß Reaktionen, welche nur durch elektromagnetische Strahlung spezifischer Wellenlänge angeregt werden können; mit dem erfindungsgemäßen Verfahren durchgeführt werden können.

Um ein sicheres Zünden des die kurzwellige, elektromagnetische Wellen emittierenden Gases sicherzustellen, wird darüber hinaus vorgeschlagen, daß eine Zündung des unter Unterdruck stehenden Gases durch zusätzliche Bestrahlung und Anregung einer festen, insbesondere metallischen Elektrode in dem das unter Unterdruck stehende Gas aufnehmenden Behälter vorgenommen wird. Durch Vorsehen einer insbesondere metallischen Elektrode in dem das unter Unterdruck stehende Gas aufnehmenden Behälter wird durch die langwellige, elektromagnetische Strahlung ein Zündfunke an der festen, insbesondere metallischen Elektrode ausgebildet, welcher das unter Unterdruck stehende Gas in dem Behälter mit Sicherheit zündet, so daß durch die Gasentladung des unter Unterdruck stehenden Gases kontinuierlich kurzwellige, elektromagnetische Strahlung zur Verfügung gestellt wird. Durch Vorsehen der Elektrode außerhalb der Ausgangsmaterialien kann darüber hinaus der Zündeffekt verbessert werden.

In bevorzugter Weise und um elektromagnetische Strahlung mit spezifischer Wellenlänge zur Verfügung zu stellen, wird das erfindungsgemäße Verfahren so durchgeführt, daß als kurzwellige, elektromagnetische Strahlung emittierende Substanz ein unter Unterdruck stehendes Gas verwendet wird.

In bevorzugter Weise wird das erfindungsgemäße Verfahren so geführt, daß für das unter Unterdruck stehende Gas zur Erzeugung der kurzwelligen, elektromagnetischen Strahlung Edelgase, Methan, CO₂ und insbesondere Gase, welche Kohlenstoffbanden bei 193 und 247 nm emittieren, verwendet werden. Durch Verwendung von Edelgasen, wie Argon, von Methan oder CO₂ sowie Gasen, welche Kohlenstoffbanden bei 193 und 247 nm emittieren, kann eine spezifische Anregung ausgewählter Substanzen durchgeführt werden sowie eine gezielte Reaktionsführung sichergestellt werden.

Für eine möglichst breite Streuung der zu emittierenden, kurzwelligen, elektromagnetischen Strahlung ist das erfindungsgemäße Verfahren so weitergebildet, daß als die kurzwellige, elektromagnetische Strahlung emittierende Substanz Metalle oder metallähnliche Substanzen verwendet werden, welche bei Betriebsbedingungen flüchtige Substanzen bilden, welche bei Bestrahlung und Anregung mit langwelliger, elektromagnetischer Strahlung kurzwellige, elektromagnetische Strahlung abgeben, wobei als Metalle oder metallähnliche Substanzen insbesondere As, Bi, Cd, Cs, Ge, Hg, P, Pb, Rb, Sb, Se, Sn, Te, Tl oder Zn verwendet werden. Durch Vorsehen von Metallen oder metallähnlichen Substanzen, welche bei Betriebsbedingungen flüchtige Substanzen bilden, die als kurzwellige, elektromagnetische Strahlung emittierende Substanz wirken, gelingt es, unterschiedlichste Anregungsenergien bzw. unterschiedlichste Wellenlängen von kurzwelliger, elektromagnetischer Strahlung auszusenden, so daß eine Vielzahl von chemischen Reaktionen bzw. Umsetzungen mit dem erfindungsgemäßen Verfahren durchgeführt werden können. Dadurch, daß die kurzwellige, elektromagnetische Strahlung aussendenden Substanzen sich in einem in der Reaktionsmischung befindlichen Behälter befinden, ist darüber hinaus eine intensive Bestrahlung des Reaktionsgemisches bzw. der Ausgangsmaterialien sichergestellt, so daß nicht nur eine Vielzahl von Reaktionen mit dem erfindungsgemäßen Verfahren durchgeführt werden können, sondern auch erhöhte Ausbeuten an Reaktionsprodukten sichergestellt werden können.

Um gleichzeitig eine Mehrzahl von unterschiedlichen Wellenlängen kurzwelliger, elektromagnetischer Strahlungen emittieren zu können, wird das erfindungsgemäße Verfahren bevorzugt so geführt, daß als die kurzwellige, elektromagnetische Strahlung emittierende Substanz eine Mischung von wenigstens einem unter Unterdruck stehenden Gas und/oder wenigstens einem Metall oder einer metallähnlichen Substanz verwendet wird. Durch das Vorsehen einer Kombination eines unter Unterdruck stehenden Gases und wenigstens eines Metalls oder einer metallähnlichen Substanz kann ein breiteres Spektrum von UV-Banden bzw. -Wellenlängenbereichen zur Verfügung gestellt werden und somit auch die Anregung von komplexen Reaktionsgemischen bzw. die Förderung und Aufrechterhaltung von komplexeren Reaktionen sichergestellt werden.

Als langwellige, elektromagnetische Strahlungen, welche zur Anregung der Substanz bzw. Substanzen verwendet werden, die kurzwellige, elektromagnetische Strahlungen emittieren, werden gemäß der Erfindung bevorzugt Mikrowellen eingesetzt.

Als kurzwellige, elektromagnetische Strahlung, welche zur Anregung von Reaktionsgemischen bzw. der Ausgangsmaterialien eingesetzt wird, werden erfindungsgemäß bevorzugt UV-Strahlen angewandt, da im UV-Bereich relativ viele Substanzen bzw. Reaktionsgemische angeregt werden können bzw. viele Reaktionen gefördert werden können.

Dadurch, daß der Behälter der erfindungsgemäßen Vorrichtung zur Aufnahme der kurzwellige, elektromagnetische Strahlung abgebenden Substanz im Aufnahmebehälter angeordnet ist und wenigstens teilweise von den Ausgangsmaterialien umschlossen ist, gelingt einerseits, eine intensive Bestrahlung des Reaktionsgemisches mit den kurzwelligen, elektromagnetischen Strahlungen sicherzustellen, so daß eine höhere Reaktionsgeschwindigkeit bzw. bessere Ausbeuten der in dem Aufnahmebehälter durchzuführenden, chemischen Reaktion sichergestellt ist. Dadurch, daß der Aufnahmebehälter für die Ausgangsmaterialien von einem druckdichten, doppelwandigen Behälter gebildet ist, welcher mit einem druckdichten Verschluß ausgebildet ist, welcher insbesondere mit einer Berstscheibe versehen ist, können im Inneren des Aufnahmebehälters auch Reaktionen unter erhöhtem Druck bzw. erhöhter Temperatur durchgeführt werden.

Um das Zünden der Gasentladung und deren gleichmäßigen Betrieb im Inneren des Behälters zur Aufnahme der kurzwellige, elektromagnetische Strahlung abgebenden Substanz und eine möglichst intensive Abgabe der UV-Strahlung sicherzustellen, wird für die erfindungsgemäße Vorrichtung vorgeschlagen, daß der Behälter zur Aufnahme der kurzwellige, elektromagnetische Strahlung abgebenden Substanz eine zusätzliche Zündeinrichtung, insbesondere eine Elektrode, umfaßt. Durch Vorsehen der Elektrode außerhalb der Ausgangsmaterialien kann darüber hinaus der Zündeffekt verbessert werden.

Um eine möglichst intensive Bestrahlung und eine hohe Strahlenausbeute der die kurzwellige Strahlung abgebenden Substanz sicherzustellen, ist die Erfindung bevorzugt so weitergebildet, daß der Behälter zur Aufnahme der kurzwellige, elektromagnetische Strahlung abgebenden Substanz von einem geschlossenen, im wesentlichen rohrförmigen Behälter gebildet ist. Durch Vorsehen eines geschlossenen, im wesentlichen rohrförmigen Behälters, welcher in der Reaktionsmischung wenigstens teilweise eingebettet ist, gelingt eine möglichst gleichmäßige Bestrahlung der umzusetzenden Substanzen mit der kurzwelligen, elektromagnetischen Strahlung, so daß in dem Aufnahmebehälter enthaltene Ausgangsmaterialien ohne weitere Durchwirbelung oder Rühren innerhalb kürzester Zeit vollständig umgesetzt bzw. angeregt werden können.

Um einen möglichst vollständigen Durchtritt der kurzwelligen, elektromagnetischen Strahlung durch den für die diese Strahlung abgebende Substanz vorgesehenen Behälter sicherzustellen und die Strahlenausbeute zu optimieren, ist die erfindungsgemäße Vorrichtung so weitergebildet, daß der Behälter zur Aufnahme der kurzwellige, elektromagnetische Strahlung abgebenden Substanz aus Quarzglas oder UV-transparenten Al-Oxid-Verbindungen, insbesondere Saphir, gebildet ist.

Damit die Anregung der kurzwellige, elektromagnetische Strahlung abgebenden Substanz mit Hilfe der langwelligen, elektromagnetischen Strahlung mit Sicherheit gelingt und die für die Anregung der kurzwelligen, elektromagnetischen Strahlung erforderliche Strahlungsmenge an langwelliger, elektromagnetischer Strahlung nicht übermäßig hoch wird, ist bevorzugt, daß der Aufnahmebehälter für die Ausgangsmaterialien aus SiO₂, einem für langwellige, elektromagnetische Strahlung transparentem Kunststoff, beispielsweise PTFE, TFM, PFA, oder Al-Oxid-Verbindungen ausgebildet ist. Durch Ausbildung des Aufnahmebehälters aus für langwellige, elektromagnetische Strahlung transparentem Kunststoff, SiO₂ oder Al-Oxid-Verbindungen gelingt es, die langwellige, elektromagnetische Strahlung im wesentlichen ungefiltert und ohne Abschwächung durch den Aufnahmebehälter hindurchzuleiten, so daß die Anregung der Gasentladung ohne übermäßigen Energieaufwand möglich wird.

Damit der Gang einer Reaktion überprüft werden kann bzw. im Laufe der Reaktion Ausgangsmaterial nachdosiert werden kann, kann der Aufnahmebehälter so ausgebildet werden, daß der Verschluß mit einer getrennt verschließbaren Öffnung, insbesondere zur Probenentnahme und/oder Dosierung von Ausgangsmaterialien, ausgebildet ist.

Um in dem Aufnahmebehälter für die Ausgangsmaterialien Reaktionen bei erhöhter Temperatur oder bei erhöhtem Druck durchführen zu können, ist der Aufnahmebehälter für die Ausgangsmaterialien entweder allseitig von einem von einem Mikrowellenofen gebildeten Generator zur Erzeugung langwelliger, elektromagnetischer Strahlung umschlossen oder einseitig von mittels Hohlleiter oder ähnlichen in der Mikrowellentechnik bekannten Vorrichtungen gebündelten Mikrowellen bestrahlt. Der Aufnahmebehälter befindet sich daher in einem Feld langwelliger, elektromagnetischer Strahlung, insbesondere einem Mikrowellenfeld. Die Mikrowellen können dem Aufnahmebehälter für die Ausgangsmaterialien entweder gebündelt über einen Hohlraumresonator oder diffus mittels "multimode cavity" (z.B. Mikrowellenofen) zugeführt werden, erhitzen dabei das Reaktionsgemisch auf eine gewünschte Temperatur und bilden die Gasentladung im inneren des Behälters zur Aufnahme der kurzwellige, elektromagnetische Strahlung abgebenden Substanz aus.

Die Erfindung wird nachfolgend anhand von in der beiliegenden Zeichnung schematisch dargestellten Ausführungsbeispielen näher erläutert. In dieser zeigen:
Fig. 1 eine teilweise Schnittansicht einer Vorrichtung mit einem Aufnahmebehälter gemäß dem. Stand der Technik, in welchem im Inneren ein weiterer Behälter zur Aufnahme der kurzwellige, elektromagnetische Strahlung abgebenden Substanz angeordnet ist, zur Durchführung des erfindungsgemäßen Verfahrens;
Fig. 2 eine schematische Schnittansicht einer abgewandelten Ausführungsform einer Vorrichtung gemäß dem Stand der Technik, wobei zusätzlich schematisch eine Einrichtung zur Anregung mit langwelliger, elektromagnetischer Strahlung, insbesondere Mikrowellen, dargestellt ist;
Fig. 3 eine teilweise Schnittansicht durch eine Ausbildung einer erfindungsgemäßen Vorrichtung zur Durchführung des erfindungsgemäßen Verfahrens, wobei der Aufnahmebehälter für die umzusetzenden Ausgangsmaterialien in einem Druckbehälter aufgenommen ist; und
Fig. 4 eine weitere schematische Schnittansicht einer erfindungsgemäßen Vorrichtung, in welcher der Druckbehälter von Fig. 3 in einem üblichen, schematisch dargestellten Mikrowellenofen angeordnet ist.

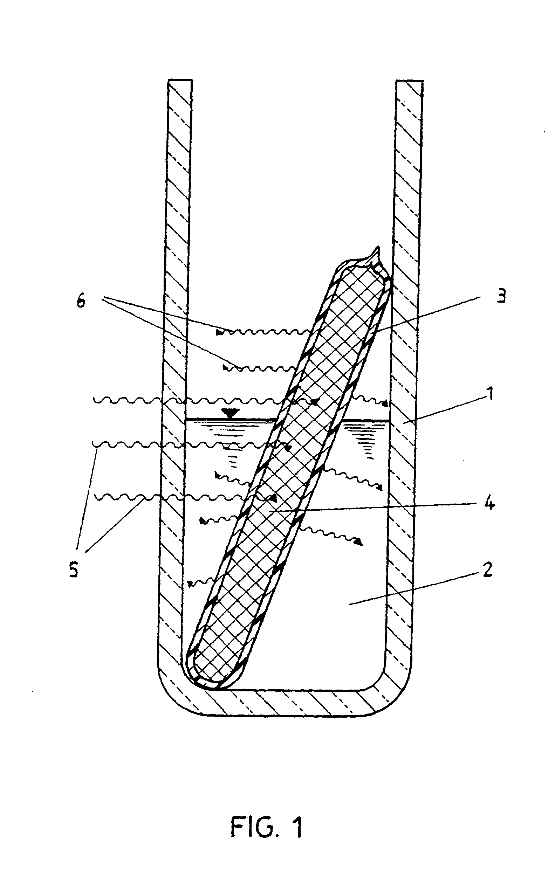

In Fig. 1 ist allgemein mit 1 ein Aufnahmebehälter bezeichnet, in welchem die Ausgangsmaterialien bzw. die umzusetzenden chemischen Substanzen, welche schematisch mit 2 bezeichnet sind, eingebracht sind. Dieser Aufnahmebehälter 1 ist aus für langwellige, elektromagnetische Strahlung durchlässigem Material, insbesondere Mikrowellen-durchlässigem Material, wie SiO₂, aus Mikrowellen-durchlässigen Kunststoffen oder aus speziellen A1-Oxiden gefertigt. Im Inneren des Aufnahmebehälters 1 und teilweise in die Reaktionsmischung bzw. die Ausgangsmaterialien 2 eingetaucht ist ein gasdicht verschlossener Behälter 3 angeordnet, in dessen Inneren sich die nach Anregung kurzwellige, elektromagnetische Strahlung abgebende Substanz, wie ein Edelgas, oder bei Arbeitsbedingungen UV-Strahlung abgebende Substanzen, wie Metalle oder Metallverbindungen, welche in Fig. 1 schematisch mit 4 angedeutet sind, befinden. Auf den Aufnahmebehälter 1 trifft im Betriebszustand von einem nicht dargestellten Generator ausgesandte, langwellige, elektromagnetische Strahlung 5, insbesondere Mikrowellen, auf, welche aufgrund der Materialwahl des offenen Behälters 1 diesen durchdringt und ebenso durch den im Inneren des Aufnahmebehälters 1 angeordneten Behälter 3 für die kurzwellige, elektromagnetische Strahlung abgebende Substanz hindurchtreten kann. Der Behälter 3 ist hiebei nicht nur für langwellige, elektromagnetische Strahlung 5 durchlässig, sondern auch für die durch die in seinem Inneren ausgesandten UV- bzw. kurzwellige, elektromagnetische Strahlung 6. Durch das Hindurchtreten der langwelligen, elektromagnetischen Strahlung 5 durch den Aufnahmebehälter 1 und den Behälter 3 wird die im Inneren des Behälters 3 enthaltene Substanz zur Abgabe von kurzwelliger, elektromagnetischer Strahlung 6 angeregt, welche nach Durchtreten der Wand des Behälters 3 direkt auf die Reaktionsmischung 2 trifft und auf diese Weise eine besonders intensive UV-Bestrahlung des Reaktionsgemisches bzw. der Ausgangsmaterialien 2 sicherstellt. Die Form und die in der nicht dargestellten Anordnung zur Anregung mit langwelliger, elektromagnetischer Strahlung 5 angeordnete Anzahl von Aufnahmebehältern 1 kann beliebig gewählt werden, da die Anregung des Reaktionsgemisches 2 lediglich durch die in dem Behälter 3 enthaltenen Substanzen und den von diesen abgegebenen UV-Strahlen bestimmt wird.

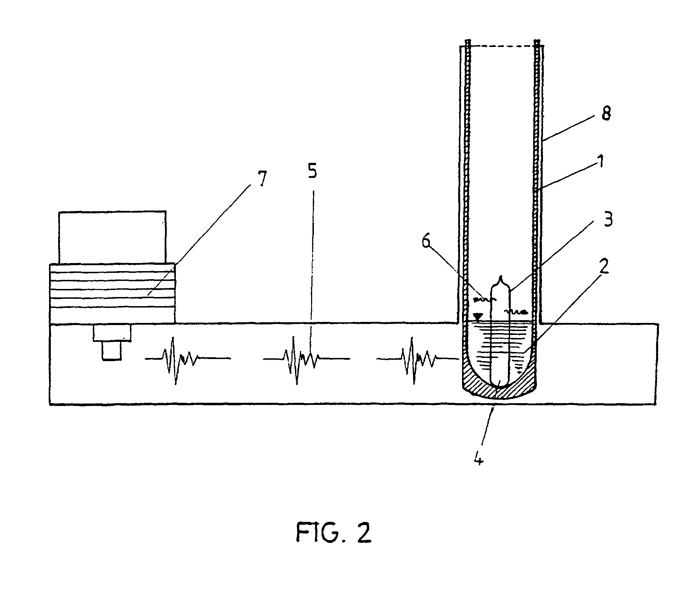

In Fig. 2 ist ein wiederum mit 1 bezeichneter Aufnahmebehälter in einer schematisch dargestellten Anordnung zur Abgabe von langwelliger, elektromagnetischer Strahlung 5, insbesondere von Mikrowellen dargestellt. In dieser Anordnung sendet ein Generator 7, insbesondere ein Magnetron, Mikrowellen 5 aus, welche durch einen Hohlleiter gebündelt nach einem Durchtritt durch den Aufnahmebehälter 1 und den Behälter 3 die im Inneren des Behälters 3 enthaltene Substanz zur Abgabe von kurzwelliger, elektromagnetischer Strahlung 6 anregen. Der Aufnahmebehälter 1 ist hiebei in einer offenen Hülse 8 angeordnet, wobei das System gemäß Fig. 2 zum Arbeiten unter Normaldruck gedacht ist. Mit der Anordnung gemäß Fig. 2 ist es möglich, bei Temperaturen zwischen Raumtemperatur und Siedetemperatur des Reaktionsgemisches zu arbeiten.

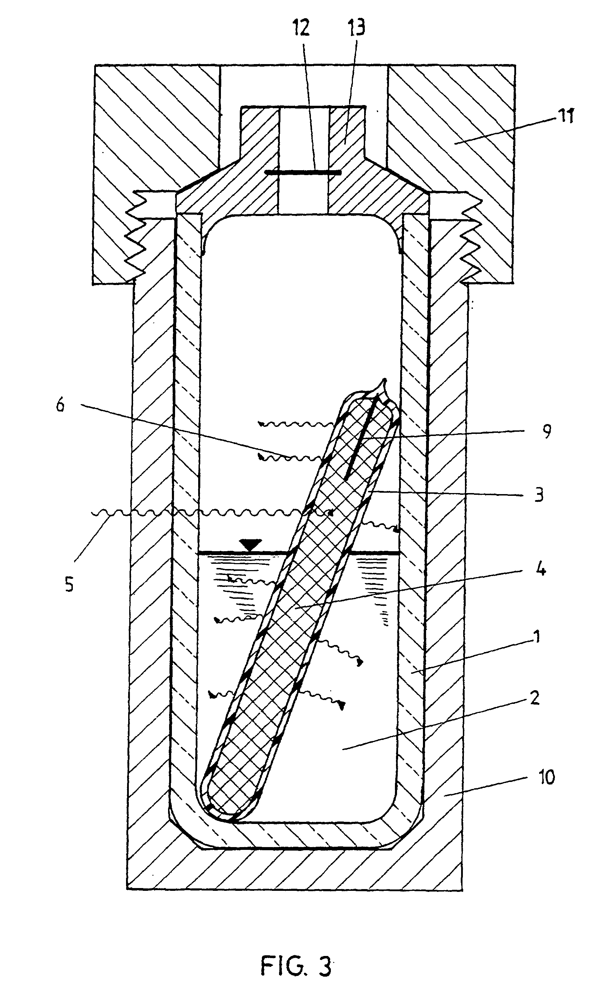

Fig. 3 zeigt eine Schnittansicht eines Aufnahmebehälters 1 gemäß der Erfindung zur Aufnahme von chemischen Reaktionsmischungen 2, wobei bei der Darstellung gemäß Fig. 3 die Bezugszeichen von Fig. 1 unverändert übernommen wurden. Im Inneren der Reaktionsmischung 2 ist wiederum ein Behälter 3 angeordnet, in welchem durch langwellige, elektromagnetische Strahlung 5 anregbare Substanzen 4 enthalten sind, welche nach ihrer Anregung die schematisch mit 6 angedeuteten, kurzwelligen, elektromagnetischen Strahlungen, insbesondere UV-Strahlungen abgeben. Um eine sichere Anregung der im Inneren des Behälters 3 enthaltenen Substanzen 4 zu gewährleisten bzw. deren Zündung zu unterstützen, ist der Behälter 3 mit einer Zündelektrode 9, insbesondere einer metallischen Zündelektrode, versehen, welche durch Anregung mit langwelliger, elektromagnetischer Strahlung 5 in der Lage ist, die im Behälter 3 enthaltenen Substanzen 4 zu zünden und so zur Abgabe von UV-Strahlen 6 anzuregen. Der Behälter 1 gemäß Fig. 3 ist weiters von einem zweiten Behälter 10 umgeben, welcher aus einem für langwellige, elektromagnetische Strahlung 5 durchlässigen Material gefertigt ist und derart ausgebildet ist, daß er auch für Reaktionen unter erhöhtem Druck, welche im Inneren des Behälters 1 ablaufen, geeignet ist. Der zusätzliche Behälter 10 ist hiebei mit einem schematisch angedeuteten, druckdichten Verschluß 11 versehen, so daß mit der Vorrichtung gemäß Fig. 3 nicht nur Reaktionen bei erhöhter Temperatur, sondern auch bei erhöhtem Druck durchgeführt werden können, welche gleichzeitig für ihre Durchführung eine Anregung mit kurzwelliger, elektromagnetischer Strahlung 6, insbesondere UV-Strahlung benötigen. Um einen unzulässigen Reaktionsdruck aus dem Behälter 1 abzulassen, ist eine Berstscheibe 12 im Deckel 13 angebracht und der Deckel 13 wird durch eine Feder auf den Behälter 1 angepreßt, so daß der Deckel bei Überdruck öffnet.

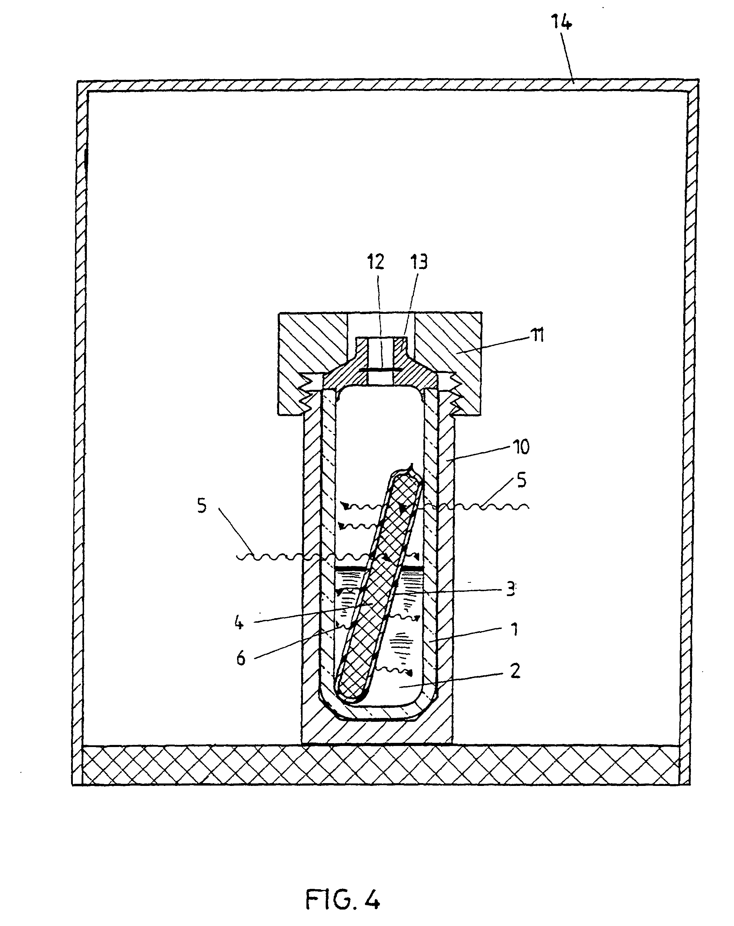

Reaktionen mit Behältern gemäß Fig. 3 werden üblicherweise, wie dies in Fig. 4 dargestellt ist, in gängigen Mikrowellenöfen durchgeführt, wobei der Ofen in Fig. 4 schematisch mit 14 angedeutet ist.

Durch die gemäß der Erfindung vorgesehene Anregung eines Reaktionsgemisches 2 durch den direkt in der Reaktionsmischung 2 vorgesehenen Behälter 3, welcher zur Abgabe von UV-Strahlen bzw. kurzwelliger, elektromagnetischer Strahlung 6 geeignete Substanzen 4, wie Edelgase oder unter Betriebsbedingungen flüchtige Metallverbindungen, enthält, welche UV-Banden emittieren, gelingt es, unmittelbar in der Reaktionsmischung bzw. den Ausgangsmaterialien 2 eine besonders hohe Strahlendichte an kurzwelliger Strahlung, insbesondere UV-Strahlen 6, zur Verfügung zu stellen und somit eine möglichst rasche und insbesondere vollständige Umsetzung des Reaktionsgemisches 2 bei beliebigen Betriebsbedingungen sicherzustellen. Durch die Gasentladung im Inneren des Behälter 3 erfolgt eine Bündelung der Mikrowellenstrahlung 5 auf das Reaktionsgemisch 2 im Behälter 1 und den Behälter 3 mit den darin befindlichen UV-Strahlung emittierenden Substanzen 4.

## Patentansprüche (Patentansprüche für folgende(n) Vertragsstaat(en): FR, IT)

1. Verfahren zum Auslösen und/oder Durchführen chemischer Reaktionen durch Bestrahlung von insbesondere flüssigen oder Gemischen aus flüssigen und festen Ausgangsmaterialien (2) mit einer kurzwelligen, elektromagnetischen Strahlung (6), welche von wenigstens einer Substanz (4) emittiert wird, welche bei Bestrahlung und Anregung mit einer langwelligen, elektromagnetischen Strahlung (5) bei Betriebsbedingungen kurzwellige, elektromagnetische Strahlung (6) abgibt, und mit der langwelligen, elektromagnetischen Strahlung, wobei die kurzwellige, elektromagnetische Strahlung (6) in einem in den Ausgangsmaterialien (2) angeordneten, geschlossenen Behälter (3) erzeugt wird, welcher die eine kurzwellige, elektromagnetische Strahlung (6) emittierende Substanz (4) enthält, wobei die chemischen Reaktionen bei Temperaturen zwischen 100 °C bis etwa 400 °C, insbesondere bis 300 °C, durchgeführt werden und die chemischen Reaktionen unter einem Druck von gegenüber Atmosphärendruck erhöhtem Druck bis etwa 200 bar durchgeführt werden.

2. Verfahren nach Anspruch 1, **dadurch gekennzeichnet, daß** als kurzwellige, elektromagnetische Strahlung (6) emittierende Substanz (4) ein unter Unterdruck stehendes Gas verwendet wird.

3. Verfahren nach Anspruch 2, **dadurch gekennzeichnet, daß** eine Zündung des unter Unterdruck stehenden Gases (4) durch zusätzliche Bestrahlung und Anregung einer festen, insbesondere metallischen Elektrode (9) in dem das unter Unterdruck stehende Gas (4) aufnehmenden Behälter (3) vorgenommen wird.

4. Verfahren nach Anspruch 2 oder 3, **dadurch gekennzeichnet, daß** für das unter Unterdruck stehende Gas (4) zur Erzeugung der kurzwelligen, elektromagnetischen Strahlung (6) Edelgase, Methan, CO₂ und insbesondere Gase, welche Kohlenstoffbanden bei 193 und 247 nm emittieren, verwendet werden.

5. Verfahren nach Anspruch 1, **dadurch gekennzeichnet, daß** als die kurzwellige, elektromagnetische Strahlung (6) emittierende Substanz Metalle (4) oder metallähnliche Substanzen verwendet werden, welche bei Betriebsbedingungen flüchtige Substanzen bilden, welche bei Bestrahlung und Anregung mit langwelliger, elektromagnetischer Strahlung (5) kurzwellige, elektromagnetische Strahlung (6) abgeben.

6. Verfahren nach Anspruch 5, **dadurch gekennzeichnet, daß** als Metalle oder metallähnliche Substanzen As, Bi, Cd, Cs, Ge, Hg, P, Pb, Rb, Sb, Se, Sn, Te, Tl oder Zn verwendet werden.

7. Verfahren nach einem der Ansprüche 1 bis 6, **dadurch gekennzeichnet, daß** als die kurzwellige, elektromagnetische Strahlung (6) emittierende Substanz (4) eine Mischung von wenigstens einem unter Unterdruck stehenden Gas und/oder wenigstens einem Metall oder einer metallähnlichen Substanz verwendet wird.

8. Verfahren nach einem der Ansprüche 1 bis 7, **dadurch gekennzeichnet, daß** als langwellige, elektromagnetische Strahlung (5) Mikrowellen verwendet werden.

9. Verfahren nach einem der Ansprüche 1 bis 8, **dadurch gekennzeichnet, daß** als kurzwellige, elektromagnetische Strahlung (6) UV-Strahlen verwendet werden.

10. Vorrichtung zum Auslösen und/oder Durchführen chemischer Reaktionen durch Bestrahlung von insbesondere flüssigen oder flüssigen und festen, in einem Aufnahmebehälter (1) aufgenommenen Ausgangsmaterialien (2) mit einer kurzwelligen, elektromagnetischen Strahlung (6) und mit einer langwelligen, elektromagnetischen Strahlung (5), mit einem Generator zur Erzeugung langwelliger, elektromagnetischer Strahlung (5) sowie einem Behälter (3) zur Aufnahme wenigstens einer Substanz (4), welche bei Bestrahlung und Anregung mit langwelliger, elektromagnetischer Strahlung (5) bei Betriebsbedingungen kurzwellige, elektromagnetische Strahlung (6) abgibt, wobei der Aufnahmebehälter (1) für die Ausgangsmaterialien (2) für die langwellige, elektromagnetische Strahlung (5) durchlässig ausgebildet ist und der Behälter (3) zur Aufnahme der kurzwellige, elektromagnetische Strahlung (6) abgebenden Substanz (4) im Aufnahmebehälter (1) angeordnet ist und wenigstens teilweise von den Ausgangsmaterialien (2) umschlossen ist, **dadurch gekennzeichnet, daß** der Aufnahmebehälter für die Ausgangsmaterialien von einem druckdichten, doppelwandigen Behälter (1, 8; 1, 10) gebildet ist, welcher mit einem druckdichten, insbesondere mit einer Berstscheibe (12) versehenen, Verschluß (11) ausgebildet ist.

11. Vorrichtung nach Anspruch 10, **dadurch gekennzeichnet, daß** der Behälter (3) zur Aufnahme der kurzwellige, elektromagnetische Strahlung (6) abgebenden Substanz (4) von einem geschlossenen, im wesentlichen rohrförmigen Behälter gebildet ist.

12. Vorrichtung nach. Anspruch 10 oder 11, **dadurch gekennzeichnet, daß** der Behälter (3) zur Aufnahme der kurzwellige, elektromagnetische Strahlung (6) abgebenden Substanz (4) aus Quarzglas oder UV-transparenten Al-Oxid-Verbindungen, insbesondere Saphir, gebildet ist.

13. Vorrichtung nach Anspruch 10, 11 oder 12, **dadurch gekennzeichnet, daß** der Behälter (3) zur Aufnahme der kurzwellige, elektromagnetische Strahlung (6) abgebenden Substanz eine zusätzliche Zündeinrichtung (9), insbesondere eine Elektrode, umfaßt.

14. Vorrichtung nach einem der Ansprüche 10 bis 13, **dadurch gekennzeichnet, daß** der Aufnahmebehälter (1) für die Ausgangsmaterialien (2) aus SiO₂, einem für langwellige, elektromagnetische Strahlung transparentem Kunststoff, beispielsweise PTFE, TFM, PFA, oder A1-Oxid-Verbindungen ausgebildet ist.

15. Vorrichtung nach einem der Ansprüche 10 bis 14, **dadurch gekennzeichnet, daß** der Aufnahmebehälter (1) für die Ausgangsmaterialien entweder allseitig von einem von einem Mikrowellenofen (14) gebildeten Generator zur Erzeugung langwelliger, elektromagnetischer Strahlung umschlossen ist oder einseitig von mittels Hohlleiter oder ähnlichen in der Mikrowellentechnik bekannten Vorrichtungen gebündelten Mikrowellen bestrahlt ist.

## Patentansprüche (Patentansprüche für folgende(n) Vertragsstaat(en): DE)

1. Verfahren zum Auslösen und/oder Durchführen chemischer Reaktionen durch Bestrahlung von insbesondere flüssigen oder Gemischen aus flüssigen und festen Ausgangsmaterialien (2) mit einer kurzwelligen, elektromagnetischen Strahlung (6), welche von wenigstens einer Substanz (4) emittiert wird, welche bei Bestrahlung und Anregung mit einer langwelligen, elektromagnetischen Strahlung (5) bei Betriebsbedingungen kurzwellige, elektromagnetische Strahlung (6) abgibt, und mit der langwelligen, elektromagnetischen Strahlung, wobei die kurzwellige, elektromagnetische Strahlung (6) in einem in den Ausgangsmaterialien (2) angeordneten, geschlossenen Behälter (3) erzeugt wird, welcher die eine kurzwellige, elektromagnetische Strahlung (6) emittierende Substanz (4) enthält, **dadurch gekennzeichnet, daß** die chemischen Reaktionen bei Temperaturen von Raumtemperatur bis etwa 400 °C, insbesondere zwischen 100 °C und 300 °C, durchgeführt werden, daß die chemischen Reaktionen unter einem Druck von gegenüber Atmosphärendruck erhöhtem Druck bis etwa 200 bar durchgeführt werden, und daß eine Zündung der Substanz zur Emission der kurzwelligen, elektromagnetischen Strahlung (6) durch Bestrahlung und Anregung einer festen, insbesondere metallischen Elektrode (9) in dem die Substanz (4) aufnehmenden Behälter (3) vorgenommen wird, wobei die Elektrode (9) außerhalb der Ausgangsmaterialien (2) vorgesehen wird.

2. Verfahren nach Anspruch 1, **dadurch gekennzeichnet, daß** als kurzwellige, elektromagnetische Strahlung (6) emittierende Substanz (4) ein unter Unterdruck stehendes Gas verwendet wird.

3. Verfahren nach Anspruch 1 oder 2, **dadurch gekennzeichnet, daß** für das unter Unterdruck stehende Gas (4) zur Erzeugung der kurzwelligen, elektromagnetischen Strahlung (6) Edelgase, Methan, CO₂ und insbesondere Gase, welche Kohlenstoffbanden bei 193 und 247 nm emittieren, verwendet werden.

4. Verfahren nach Anspruch 1, **dadurch gekennzeichnet, daß** als die kurzwellige, elektromagnetische Strahlung (6) emittierende Substanz Metalle (4) oder metallähnliche Substanzen verwendet werden, welche bei Betriebsbedingungen flüchtige Substanzen bilden, welche bei Bestrahlung und Anregung mit langwelliger, elektromagnetischer Strahlung (5) kurzwellige, elektromagnetische Strahlung (6) abgeben.

5. Verfahren nach Anspruch 4, **dadurch gekennzeichnet, daß** als Metalle oder metallähnliche Substanzen As, Bi, Cd, Cs, Ge, Hg, P, Pb, Rb, Sb, Se, Sn, Te, Tl oder Zn verwendet werden.

6. Verfahren nach einem der Ansprüche 1 bis 5, **dadurch gekennzeichnet, daß** als die kurzwellige, elektromagnetische Strahlung (6) emittierende Substanz (4) eine Mischung von wenigstens einem unter Unterdruck stehenden Gas und/oder wenigstens einem Metall oder einer metallähnlichen Substanz verwendet wird.

7. Verfahren nach einem der Ansprüche 1 bis 6, **dadurch gekennzeichnet, daß** als langwellige, elektromagnetische Strahlung (5) Mikrowellen verwendet werden.

8. Verfahren nach einem der Ansprüche 1 bis 7, **dadurch gekennzeichnet, daß** als kurzwellige, elektromagnetische Strahlung (6) UV-Strahlen verwendet werden.

9. Vorrichtung zum Auslösen und/oder Durchführen chemischer Reaktionen durch Bestrahlung von insbesondere flüssigen oder flüssigen und festen, in einem Aufnahmebehälter (1) aufgenommenen Ausgangsmaterialien (2) mit einer kurzwelligen, elektromagnetischen Strahlung (6), mit einem Generator zur Erzeugung langwelliger, elektromagnetischer Strahlung (5) sowie einem Behälter (3) zur Aufnahme wenigstens einer Substanz (4), welche bei Bestrahlung und Anregung mit langwelliger, elektromagnetischer Strahlung (5) bei Betriebsbedingungen kurzwellige, elektromagnetische Strahlung (6) abgibt, wobei der Aufnahmebehälter (1) für die Ausgangsmaterialien (2) für die langwellige, elektromagnetische Strahlung (5) durchlässig ausgebildet ist und der Behälter (3) zur Aufnahme der kurzwellige, elektromagnetische Strahlung (6) abgebenden Substanz (4) im Aufnahmebehälter (1) angeordnet ist und wenigstens teilweise von den Ausgangsmaterialien (2) umschlossen ist, **dadurch gekennzeichnet, daß** der Aufnahmebehälter für die Ausgangsmaterialien von einem druckdichten, doppelwandigen Behälter (1, 8; 1, 10) gebildet ist, welcher mit einem druckdichten Verschluß (11) ausgebildet ist, und daß der Behälter (3) zur Aufnahme der kurzwellige, elektromagnetische Strahlung (6) abgebenden Substanz eine zusätzliche Zündeinrichtung (9), insbesondere eine Elektrode, umfaßt, welche außerhalb der Ausgangsmaterialien (2) vorgesehen ist.

10. Vorrichtung nach Anspruch 9, **dadurch gekennzeichnet, daß** der Behälter (3) zur Aufnahme der kurzwellige, elektromagnetische Strahlung (6) abgebenden Substanz (4) von einem geschlossenen, im wesentlichen rohrförmigen Behälter gebildet ist.

11. Vorrichtung nach Anspruch 9 oder 10, **dadurch gekennzeichnet, daß** der Behälter (3) zur Aufnahme der kurzwellige, elektromagnetische Strahlung (6) abgebenden Substanz (4) aus Quarzglas oder UV-transparenten Al-Oxid-Verbindungen, insbesondere Saphir, gebildet ist.

12. Vorrichtung nach einem der Ansprüche 9 bis 11, **dadurch gekennzeichnet, daß** der Aufnahmebehälter (1) für die Ausgangsmaterialien (2) aus SiO₂, einem für langwellige, elektromagnetische Strahlung transparentem Kunststoff, beispielsweise PTFE, TFM, PFA, oder Al-Oxid-Verbindungen ausgebildet ist.

13. Vorrichtung nach einem der Ansprüche 9 bis 12, **dadurch gekennzeichnet, daß** der Aufnahmebehälter (1) für die Ausgangsmaterialien entweder allseitig von einem von einem Mikrowellenofen (14) gebildeten Generator zur Erzeugung langwelliger, elektromagnetischer Strahlung umschlossen ist oder einseitig von mittels Hohlleiter oder ähnlichen in der Mikrowellentechnik bekannten Vorrichtungen gebündelten Mikrowellen bestrahlt ist.

## Claims (Claims for the following Contracting State(s): FR, IT)

1. A process for triggering and/or carrying out chemical reactions by irradiating starting materials (2) and, in particular, liquid, or mixtures of liquid and solid, starting materials with short-wave electromagnetic radiation (6) emitted from at least one substance (4) sending out short-wave electromagnetic radiation upon irradiation and excitation with long-wave electromagnetic radiation (5) under operating conditions, and with long-wave electromagnetic radiation, wherein the short-wave electromagnetic radiation (6) is generated in a closed vessel (3) arranged within the starting materials (2) and containing the short-wave electromagnetic radiation (6) emitting substance (4), wherein the chemical reactions are carried out at temperatures ranging from room temperature to about 400°C and, in particular, between 100°C and 300°C and the chemical reactions are carried out under a pressure being higher than atmospheric pressure to approximately 200 bars.

2. A process according to claim 1, **characterized in that** a low pressure gas is used as the short-wave electromagnetic radiation (6) emitting substance (4).

3. A process according to claim 2, **characterized in that** ignition of the low pressure gas (4) is caused by effecting an additional irradiation and excitation of a solid electrode and, in particular, a metallic electrode (9) in the vessel (3) receiving the negative-pressure gas (4).

4. A process according to claim 2 or 3, **characterized in that** noble gases, methane, CO₂ and, in particular, gases emitting carbon bands at 193 and 247 nm are used for the low pressure gas (4) in order to generate the short-wave electromagnetic radiation (6).

5. A process according to claim 1, **characterized in that** metals (4) or metal-like substances which, under operating conditions, form volatile substances sending out short-wave electromagnetic radiation (6) upon irradiation and excitation with long-wave electromagnetic radiation (5) are used as the short-wave electromagnetic radiation (6) emitting substance.

6. A process according to claim 5, **characterized in that** As, Bi, Cd, Cs, Ge, Hg, P, Pb, Rb, Sb, Se, Sn, Te, Tl or Zn are used as metals or metal-like substances.

7. A process according to any of the claims 1 to 6, **characterized in that** a mixture of at least one low pressure gas and/or at least one metal or metal-like substance is used as the short-wave electromagnetic radiation (6) emitting substance (4).

8. A process according to any of the claims 1 to 7, **characterized in that** microwaves are used as long-wave electromagnetic radiation (5).

9. A process according to any of the claims 1 to 8, **characterized in that** UV rays are used as short-wave electromagnetic radiation (6).

10. A device for triggering and/or carrying out chemical reactions by irradiating with short-wave electromagnetic radiation (6) and long-wave electromagnetic radiation (5) starting materials (2) and, in particular, liquid, or liquid and solid, starting materials received in a receptacle (1), comprising a generator for generating long-wave electromagnetic radiation (5) as well as a vessel (3) for receiving at least one substance (4) sending out short-wave electromagnetic radiation (6) upon irradiation and excitation with long-wave electromagnetic radiation (5) under operating conditions, wherein the receptacle (1) for the starting materials (2) is designed to be permeable to long-wave electromagnetic radiation (5) and the vessel (3) receiving the short-wave electromagnetic radiation (6) emitting substance (4) is arranged within the receptacle (1) and at least partially surrounded by the starting materials (2), **characterized in that** the receptacle (1) for the starting materials (2) is formed by a pressure-thight, double-walled container (1, 8; 1, 10) formed with a pressure-thight closure (11), being provided in particular with a bursting disk (12).

11. A device according to claim 10, **characterized in that** the vessel (3) receiving the short-wave electromagnetic radiation (6) emitting substance (4) is formed by a closed, substantially tubular vessel.

12. A device according to claim 10 or 11, **characterized in that** the vessel (3) receiving the short-wave electromagnetic radiation (6) emitting substance (4) is made of quartz glass or UV-transparent aluminum oxide compounds and, in particular, sapphire.

13. A device according to claim 10, 11 or 12, **characterized in that** the vessel (3) receiving the short-wave electromagnetic radiation (6) emitting substance comprises an additional ignition means (9), particularly an electrode.

14. A device according to any of the claims 10 to 13, **characterized in that** the receptacle (1) for the starting materials (2) is made of SiO₂, a plastics transparent to long-wave electromagnetic radiation such as, for instance, PTFE, TFM, PFA, or aluminum oxide compounds.

15. A device according to any of the claims 10 to 14, **characterized in that** the receptacle (1) for the starting materials is either enclosed on all sides by a long-wave electromagnetic radiation producing generator comprised of a microwave oven (14) or unilaterally irradiated by microwaves focussed by means of a hollow waveguide or similar means known in microwave technology.

## Claims (Claims for the following Contracting State(s): DE)

1. A process for triggering and/or carrying out chemical reactions by irradiating starting materials (2) and, in particular, liquid, or mixtures of liquid and solid, starting materials with short-wave electromagnetic radiation (6) emitted from at least one substance (4) sending out short-wave electromagnetic radiation upon irradiation and excitation with long-wave electromagnetic radiation (5) under operating conditions, and with long-wave electromagnetic radiation, wherein the short-wave electromagnetic radiation (6) is generated in a closed vessel (3) arranged within the starting materials (2) and containing the short-wave electromagnetic radiation (6) emitting substance (4), **characterized in that** the chemical reactions are carried out at temperatures ranging from room temperature to about 400°C and, in particular, between 100°C and 300°C, **in that** the chemical reactions are carried out under a pressure being higher than atmospheric pressure to approximately 200 bars, and **in that** an ignition of the substance for emitting the short-wave electromagnetic radiation (6) is caused by an radiation and excitation of a solid, in particular metallic electrode (9) in the vessel (3) comprising the substance (4), wherein the electrode (9) is provided outside of the starting materials (2).

2. A process according to claim 1, **characterized in that** a low pressure gas is used as the short-wave electromagnetic radiation (6) emitting substance (4).

3. A process according to claim 1 or 2, **characterized in that** noble gases, methane, CO₂ and, in particular, gases emitting carbon bands at 193 and 247 nm are used for the low pressure gas (4) in order to generate the short-wave electromagnetic radiation (6).

4. A process according to claim 1, **characterized in that** metals (4) or metal-like substances which, under operating conditions, form volatile substances sending out short-wave electromagnetic radiation (6) upon irradiation and excitation with long-wave electromagnetic radiation (5) are used as the short-wave electromagnetic radiation (6) emitting substance.

5. A process according to claim 4, **characterized in that** As, Bi, Cd, Cs, Ge, Hg, P, Pb, Rb, Sb, Se, Sn, Te, Tl or Zn are used as metals or metal-like substances.

6. A process according to any of the claims 1 to 5, **characterized in that** a mixture of at least one low pressure gas and/or at least one metal or metal-like substance is used as the short-wave electromagnetic radiation (6) emitting substance (4).

7. A process according to any of the claims 1 to 6, **characterized in that** microwaves are used as long-wave electromagnetic radiation (5).

8. A process according to any of the claims 1 to 7, **characterized in that** UV rays are used as short-wave electromagnetic radiation (6).

9. A device for triggering and/or carrying out chemical reactions by irradiating with short-wave electromagnetic radiation (6) starting materials (2) and, in particular, liquid, or liquid and solid, starting materials received in a receptacle (1), comprising a generator for generating long-wave electromagnetic radiation (5) as well as a vessel (3) for receiving at least one substance (4) sending out short-wave electromagnetic radiation (6) upon irradiation and excitation with long-wave electromagnetic radiation (5) under operating conditions, wherein the receptacle (1) for the starting materials (2) is designed to be permeable to long-wave electromagnetic radiation (5) and the vessel (3) receiving the short-wave electromagnetic radiation (6) emitting substance (4) is arranged within the receptacle (1) and at least partially surrounded by the starting materials (2), **characterized in that** the receptacle (1) for the starting materials (2) is formed by a pressure-tight, double-walled container (1, 8; 1, 10) formed with a closure (11), and **in that** the vessel (3) receiving the short-wave electromagnetic radiation (6) emitting substance comprises an additional ignition means (9), particularly an electrode which is provided outside of the starting materials (2).

10. A device according to claim 9, **characterized in that** the vessel (3) receiving the short-wave electromagnetic radiation (6) emitting substance (4) is formed by a closed, substantially tubular vessel.

11. A device according to claim 9 or 10, **characterized in that** the vessel (3) receiving the short-wave electromagnetic radiation (6) emitting substance (4) is made of quartz glass or UV-transparent aluminum oxide compounds and, in particular, sapphire.

12. A device according to any of the claims 9 to 11, **characterized in that** the receptacle (1) for the starting materials (2) is made of SiO₂, a plastics transparent to long-wave electromagnetic radiation such as, for instance, PTFE, TFM, PFA, or aluminum oxide compounds.

13. A device according to any of the claims 9 to 12, **characterized in that** the receptacle (1) for the starting materials is either enclosed on all sides by a long-wave electromagnetic radiation producing generator comprised of a microwave oven (14) or unilaterally irradiated by microwaves focussed by means of a hollow waveguide or similar means known in microwave technology.

## Revendications (Revendications pour l'(les) Etat(s) contractant(s) suivant(s): FR, IT)

1. Procédé pour déclencher et/ou réaliser des réactions chimiques par irradiation de matériaux de départ en particulier liquides, ou de mélanges de matériaux de départ liquides et solides (2), avec un rayonnement électromagnétique de petite longueur d'onde (6), qui est émis par au moins une substance (4), qui lors de l'irradiation et de l'activation avec un rayonnement électromagnétique de grande longueur d'onde (5), dégage dans les conditions de fonctionnement, un rayonnement électromagnétique de petite longueur d'onde (6), et avec le rayonnement électromagnétique de grande longueur d'onde, où le rayonnement électromagnétique de petite longueur d'onde (6) est produit dans un récipient (3) fermé, disposé dans les matériaux de départ (2), lequel contient la substance (4) émettant un rayonnement électromagnétique de petite longueur d'onde (6), où les réactions chimiques sont réalisées à des températures de 100°C à environ 400°C, en particulier à 300°C, et où les réactions chimiques sont réalisées sous une pression supérieure par rapport à la pression atmosphérique, de jusqu'à environ 200 bar.

2. Procédé selon la revendication 1, **caractérisé en ce que** l'on utilise comme substance (4) émettant un rayonnement électromagnétique de petite longueur d'onde (6), un gaz présent en dépression.

3. Procédé selon la revendication 2, **caractérisé en ce qu'**une inflammation du gaz (4) présent en dépression est effectuée par irradiation et activation d'une électrode (9) solide, en particulier métallique dans le récipient (3) recevant le gaz (4) présent en dépression.

4. Procédé selon la revendication 2 ou 3, **caractérisé en ce que** l'on utilise comme gaz (4) présent en dépression pour produire le rayonnement électromagnétique de petite longueur d'onde (6), un gaz rare, le méthane, le CO₂ et en particulier, des gaz qui émettent de 193 à 247 nm.

5. Procédé selon la revendication 1, **caractérisé en ce que** l'on utilise comme substance (4) émettant le rayonnement électromagnétique de petite longueur d'onde (6), des métaux ou des substances de type métal, qui forment dans les conditions de fonctionnement, des substances volatiles qui lors de l'irradiation et de l'activation avec un rayonnement électromagnétique de grande longueur d'onde (5), dégagent un rayonnement électromagnétique de petite longueur d'onde (6).

6. Procédé selon la revendication 5, **caractérisé en ce que** comme métal ou substance de type métal, on utilise As, Bi, Cd, Cs, Ge, Hg, P, Pb, Rb, Sb, Se, Sn, Te, Tl ou Zn.

7. Procédé selon l'une des revendications 1 à 6, **caractérisé en ce que** l'on utilise comme substance (4) émettant le rayonnement électromagnétique de petite longueur d'onde (6), un mélange d'au moins un gaz présent en dépression et/ou au moins un métal ou une substance de type métal.

8. Procédé selon l'une des revendications 1 à 7, **caractérisé en ce que** l'on utilise comme rayonnement électromagnétique de grande longueur d'onde (5), des micro-ondes.

9. Procédé selon l'une des revendications 1 à 8, **caractérisé en ce que** l'on utilise comme rayonnement électromagnétique de petite longueur d'onde (6), des rayons U.V.

10. Dispositif pour déclencher et/ou réaliser des réactions chimiques par irradiation de matériaux de départ en particulier liquides, ou de mélanges de matériaux de départ liquides et solides (2), présents dans un récipient de réception (1), avec un rayonnement électromagnétique de petite longueur d'onde (6) et un rayonnement électromagnétique de grande longueur d'onde (5), avec un générateur pour produire un rayonnement électromagnétique de grande longueur d'onde (5), ainsi qu'un récipient (3) pour recevoir au moins une substance (4), qui lors de l'irradiation et de l'activation avec un rayonnement électromagnétique de grande longueur d'onde (5), dégage dans les conditions de fonctionnement, un rayonnement électromagnétique de petite longueur d'onde (6), où le recipient de réception (1) pour les matériaux de départ (2) est formé de manière perméable au rayonnement électromagnétique de grande longueur d'onde (5) et le récipient (3) pour la réception de la substance (4) dégageant le rayonnement électromagnétique de petite longueur d'onde (6) est disposé dans le récipient de réception (1) et est entouré au moins partiellement par les matériaux de départ (2), **caractérisé en ce que** le récipient de réception pour les matériaux de départ est formé d'un récipient à double paroi, résistant à la pression (1, 8 ; 1, 10), qui est équipé d'une fermeture (11) résistant à la pression, en particulier munie d'une vitre anti-explosion (12).

11. Dispositif selon la revendication 10, **caractérisé en ce que** le récipient (3) pour la réception de la substance (4) dégageant le rayonnement électromagnétique de petite longueur d'onde (6), est formé comme un récipient essentiellement tubulaire, fermé.

12. Dispositif selon la revendication 10 ou 11, **caractérisé en ce que** le récipient (3) pour la réception de la substance (4) dégageant le rayonnement électromagnétique de petite longueur d'onde (6), est formé en quartz ou en composés oxyde d'Al transparents aux U.V., en particulier le saphir.

13. Dispositif selon la revendication 10, 11 ou 12, **caractérisé en ce que** le récipient (3) comprend pour la réception de la substance émettant le rayonnement électromagnétique de petite longueur d'onde (6), un dispositif d'allumage supplémentaire (9), en particulier une électrode.

14. Dispositif selon l'une des revendications 10 à 13, **caractérisé en ce que** le récipient de réception (1) pour les matériaux de départ (2) est formé de SiO₂, d'une matière plastique transparente au rayonnement électromagnétique de grande longueur d'onde, par exemple le PTFE, le TFM, le PFA ou des composé oxyde d'Al.

15. Dispositif selon l'une des revendications 10 à 14, **caractérisé en ce que** le récipient de réception (1) pour les matériaux de départ est entouré de tous côtés par un générateur formé d'un four à micro-ondes (14) pour produire un rayonnement électromagnétique de grande longueur d'onde ou est irradié d'un côté de micro-ondes assemblées à l'aide d'un conducteur creux ou dispositif similaire connu dans la technique des micro-ondes.

## Revendications (Revendications pour l'(les) Etat(s) contractant(s) suivant(s): DE)

1. Procédé pour déclencher et/ou réaliser des réactions chimiques par irradiation de matériaux de départ en particulier liquides, ou de mélanges de matériaux de départ liquides et solides (2), avec un rayonnement électromagnétique de petite longueur d'onde (6), qui est émis par au moins une substance (4), qui lors de l'irradiation et de l'activation avec un rayonnement électromagnétique de grande longueur d'onde (5), dégage dans les conditions de fonctionnement, un rayonnement électromagnétique de petite longueur d'onde (6), et avec le rayonnement électromagnétique de grande longueur d'onde, où le rayonnement électromagnétique de petite longueur d'onde (6) est produit dans un récipient (3) fermé, disposé dans les matériaux de départ (2), lequel contient la substance (4) émettant un rayonnement électromagnétique de petite longueur d'onde (6), **caractérisé en ce que** les réactions chimiques sont réalisées à des températures allant de la température ambiante à environ 400°C, en particulier de 100°C à 300°C, **en ce que** les réactions chimiques sont réalisées sous une pression supérieure par rapport à la pression atmosphérique, de jusqu'à environ 200 bar, et **en ce qu'**une inflammation de la substance pour l'émission du rayonnement électromagnétique de petite longueur d'onde (6) est effectuée par irradiation et activation d'une électrode (9) solide, en particulier métallique dans le récipient (3) recevant la substance (4), où l'électrode (9) est prévue en dehors des matériaux de départ (2).

2. Procédé selon la revendication 1, **caractérisé en ce que** l'on utilise comme substance (4) émettant un rayonnement électromagnétique de petite longueur d'onde (6), un gaz présent en dépression.

3. Procédé selon la revendication 1 ou 2, **caractérisé en ce que** l'on utilise comme gaz (4) présent en dépression pour produire le rayonnement électromagnétique de petite longueur d'onde (6), un gaz rare, le méthane, le CO₂ et en particulier, des gaz qui émettent de 193 à 247 nm.

4. Procédé selon la revendication 1, **caractérisé en ce que** l'on utilise comme substance (4) émettant le rayonnement électromagnétique de petite longueur d'onde (6), des métaux ou des substances de type métal, qui forment dans les conditions de fonctionnement, des substances volatiles qui lors de l'irradiation et de l'activation avec un rayonnement électromagnétique de grande longueur d'onde (5), dégagent un rayonnement électromagnétique de petite longueur d'onde (6).

5. Procédé selon la revendication 4, **caractérisé en ce que** comme métal ou substance de type métal, on utilise As, Bi, Cd, Cs, Ge, Hg, P, Pb, Rb, Sb, Se, Sn, Te, Tl ou 2n.

6. Procédé selon l'une des revendications 1 à 5, **caractérisé en ce que** l'on utilise comme substance (4) émettant le rayonnement électromagnétique de petite longueur d'onde (6), un mélange d'au moins un gaz présent en dépression et/ou au moins un métal ou une substance de type métal.

7. Procédé selon l'une des revendications 1 à 6, **caractérisé en ce que** l'on utilise comme rayonnement électromagnétique de grande longueur d'onde (5), des micro-ondes.

8. Procédé selon l'une des revendications 1 à 7, **caractérisé en ce que** l'on utilise comme rayonnement électromagnétique de petite longueur d'onde (6), des rayons U.V.

9. Dispositif pour déclencher et/ou réaliser des réactions chimiques par irradiation de matériaux de départ en particulier liquides, ou de mélanges de matériaux de départ liquides et solides (2), présents dans un récipient de réception (1), avec un rayonnement électromagnétique de petite longueur d'onde (6), avec un générateur pour produire un rayonnement électromagnétique de grande longueur d'onde (5), ainsi qu'un récipient (3) pour recevoir au moins une substance (4), qui lors de l'irradiation et de l'activation avec un rayonnement électromagnétique de grande longueur d'onde (5), dégage dans les conditions de fonctionnement, un rayonnement électromagnétique de petite longueur d'onde (6), où le récipient de réception (1) pour les matériaux de départ (2) est formé de manière perméable au rayonnement électromagnétique de grande longueur d'onde (5) et le récipient (3) pour la réception de la substance (4) dégageant le rayonnement électromagnétique de petite longueur d'onde (6) est disposé dans le récipient de réception (1) et est entouré au moins partiellement par les matériaux de départ (2), **caractérisé en ce que** le récipient de réception pour les matériaux de départ est formé d'un récipient à double paroi, résistant à la pression (1, 8 ; 1, 10), qui est équipé d'une fermeture (11) résistant à la pression, et **en ce que** le récipient (3) comprend pour la réception de la substance émettant le rayonnement électromagnétique de petite longueur d'onde (6), un dispositif d'allumage supplémentaire (9), en particulier une électrode, qui est prévue à l'extérieur des matériaux de départ (2).

10. Dispositif selon la revendication 9, **caractérisé en ce que** le récipient (3) pour la réception de la substance (4) dégageant le rayonnement électromagnétique de petite longueur d'onde (6), est formé comme un récipient essentiellement tubulaire, fermé.

11. Dispositif selon la revendication 9 ou 10, **caractérisé en ce que** le récipient (3) pour la réception de la substance (4) dégageant le rayonnement électromagnétique de petite longueur d'onde (6), est formé en quartz ou en composés oxyde d'Al transparents aux U.V., en particulier le saphir.

12. Dispositif selon l'une des revendications 9 à 11, **caractérisé en ce que** le récipient de réception (1) pour les matériaux de départ (2) est formé de SiO₂, d'une matière plastique transparente au rayonnement électromagnétique de grande longueur d'onde, par exemple le PTFE, le TFM, le PFA ou des composé oxyde d'Al.

13. Dispositif selon l'une des revendications 9 à 12, **caractérisé en ce que** le récipient de réception (1) pour les matériaux de départ (2) est entouré de tous côtés par un générateur formé d'un four à micro-ondes (14) pour produire un rayonnement électromagnétique de grande longueur d'onde ou est irradié d'un côté de micro-ondes assemblées à l'aide d'un conducteur creux ou dispositif similaire connu dans la technique des micro-ondes.
